(19) Europäisches Patentamt
European Patent Office
Office européen des brevets

(11) Veröffentlichungsnummer : **0 277 642 B1**

(12) # EUROPÄISCHE PATENTSCHRIFT

(45) Veröffentlichungstag der Patentschrift : **06.03.91 Patentblatt 91/10**

(51) Int. Cl.[5] : **C07F 7/08**

(21) Anmeldenummer : **88101494.8**

(22) Anmeldetag : **02.02.88**

(54) **Verfahren zur Herstellung von Oximosilanen.**

(30) Priorität : **05.02.87 DE 3703484**

(43) Veröffentlichungstag der Anmeldung : **10.08.88 Patentblatt 88/32**

(45) Bekanntmachung des Hinweises auf die Patenterteilung : **06.03.91 Patentblatt 91/10**

(84) Benannte Vertragsstaaten : **AT BE CH DE ES FR GB GR IT LI LU NL SE**

(56) Entgegenhaltungen :
**BE-A- 691 785**
**US-A- 3 697 568**

(73) Patentinhaber : **Häring, Horst**
**Martinistrasse 82**
**W-8900 Augsburg (DE)**

(72) Erfinder : **Häring, Horst**
**Martinistrasse 82**
**W-8900 Augsburg (DE)**

(74) Vertreter : **TER MEER - MÜLLER - STEINMEISTER & PARTNER**
**Mauerkircherstrasse 45**
**W-8000 München 80 (DE)**

**EP 0 277 642 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Gegenstand der Erfindung ist ein Verfahren zur Herstellung von Oximosilanen unter Ausschluß von Lösungsmitteln mit Hilfe einer schnellen, wirtschaftlichen und gefahrlosen Methode.

Es ist bekannt, daß man Oximosilane durch Umsetzung von Organochlorsilanen mit Oximen in Gegenwart von geeigneten Säureakzeptoren und Lösungsmitteln herstellen kann (US-PS 3,962,160, US-PS 3,441,583, US-PS 3,341,486, US-PS 3,817,909, DE-AS 13 01 140, DE-AS 11 20 690, DE-AS 12 55 924, FR-PS 11 18 495, EP-PS 0 036 262, W. Noll. Chemie und Technologie der Silikone, Seite 342, Verlag Chemie, Weilheim 1968).

Bei diesem vorbekannten Verfahren fallen als Nebenprodukte in Abhängigkeit von dem eingesetzten Säureakzeptor quaternäre Ammoniumsalze, wie beispielsweise Ammoniumchlorid, oder Amin-Hydrochloride an. Da diese Salze zwangsläufig während der Umsetzung gebildet werden, ist es erforderlich, zur Erzeugung eines gängigen Kristallbreis eine große Menge an Lösungsmitteln zur Benetzung ihrer Oberfläche zuzugeben. Nach Beendigung der Reaktion wird das entstandene Oximosilan von dem gebildeten Salz abgetrennt, wonach das Salz mit großen Mengen Lösungsmittels nachgewaschen wird. Da diese Salze in wirtschaftlicher Weise nicht vollkommen saubergewaschen werden können, bringen sie den erheblichen Nachteil mit sich, daß sie an ihrer Oberfläche eine größere Menge des gewünschten Endproduktes, nämlich des Oximosilans absorbieren.

Das Filtrat enthält das gewünschte Oximosilan, das nach dem Abdestillieren des Lösungsmittels im Sumpf zurückbleibt. Eine anschließende Destillation des Oximosilans führt dann zu dem reinen Endprodukt.

In der Praxis hat sich gezeigt, daß aus solchen Salzen bestehende Rückstände im Oximosilan-Sumpf bei der anschließenden Destillation eine explosionsartige Zersetzung des Oximosilans über eine Beckmannsche Umlagerung verursachen können. Hierzu darf auf den Bericht des Vizepräsidenten und Forschungsdirektors Leslie J. Tyler der Firma Dow Corning (veröffentlicht in C+E News Ausgabe vom 2.9.1974) verwiesen werden.

Die Literatur beschreibt einige Verfahren, die die Bildung solcher Salze vermeiden. So offenbart die DE-OS 27 19 008 die Umsetzung eines substitutierten Aminosilans, beispielsweise von Ethyl-tris(cyclohexylamino)-silan bzw. Methyl-tris (sec.-butyl-amino)-silan mit Methyl-ethyl-ketoxim unter destillativer Abtrennung des dabei anfallenden Cyclohexylamins bzw. sec.-Butylamins zu einem Ketoximosilan, wobei der zurückbleibende Destillationssumpf, das Oximosilan, unmittelbar für gefärbte oder transparente Silikondichtungsmaterialien verwendet werden kann. Diese Verfahrensweise löst jedoch das oben angesprochene Problem nicht, da die störenden Salze bereits bei der Herstellung der Aminosilane anfallen, so daß auch diese Methode wirtschaftlich nicht zu befriedigen vermag.

In der JP-PS 80-016008 (C.A. (1980), 92-199928) wird die Umsetzung von Alkoxisilanen, vorzugsweise von Siliziumtetraalkoxisilanen mit Hilfe eines Umesterungs-Katalysators aus der Reihe der Cyclo-diaza-undazene mit Ketoximen beschrieben. Es hat sich jedoch gezeigt, daß diese Umsetzungen äußerst langwierig sind, da die Reaktion sehr schleppend verläuft, wobei eine große Vielzahl verschiedener Substitutionsprodukte anfällt. Weiterhin läßt sich ein vollständiger Ersatz der Alkoxigruppen mit Hilfe dieser Reaktion nicht erreichen. Für die Herstellung von tetra- und trifuntionellen Oximosilanen bietet diese Verfahrensweise also keine wirtschaftliche Lösung.

Die US-PS 3 697 568 beschreibt Iminoxiorganosilane und Verfahren zur ihrer Herstellung. Diese Iminoxisilane unterscheiden sich von der erfindungsgemäß hergestellten dadurch, daß sie nebem dem Oximrest einen zusätzlichen Glykoletherrest aufweisen. Zur Herstellung dieser Verbindungen wird entweder ein Halogensilan oder ein Acyloxisilan in Gegenwart von Ammoniak oder eines primären Alkylamins oder Arylamins in einem inerten Verdünnungsmittel mit einem Oxim umgesetzt (Ansprüche 12 und 13). Wie auch aus den Beispielen hervorgeht, ist die Anwendung einer stickstoffhaltigen Base in einem inerten Verdünnungsmedium zwingend notwendig, um die Reaktion vollständig ablaufen zu lassen. Das Beispiel 6 dieser Druckschrift beschreibt die Umsetzung von Methyltriacetoxisilan mit einem Acetaldehydoxim, wobei zunächst Essigsäure und flüchtige Produkte abdestilliert und dann zur Umsetzung mit dem Monomethylether von Ethylenglykol in Gegenwart von Ammoniak zu Ende gebracht wird. Nach dieser Umsetzung, wird wie bei sämtlichen anderen beschriebenen Verfahrensweisen auch, der das Ammoniumsalz enthaltende Niederschlag abfiltriert und mit einem organischen Lösungsmittel gewaschen. Daher fallen auch bei dieser vorbekannten Arbeitsweise quaternäre Ammoniumsalze in großen Mengen her, die, wie oben bereits ausgeführt wurde, bei der späteren Destillation des Lösungsmittels bzw. des Endprodukts eine explosionsartige Zersetzung des Oximosilans über die Beckmannsche Umlagerung verursachen können.

Die Aufgabe der vorliegenden Erfindung besteht somit darin, ein Verfahren anzugeben, mit dem es gelingt, die gewünschten Oximosilane ohne störenden Anfall von Feststoffen, namentlich von quaternären Ammoniumsalzen unter Ausschluß von Lösungsmitteln mit Hilfe eines relativ schnellen und wirtschaftlichen Prozesses zu bilden und dabei die explosionsartige Zersetzung des Oximosilans durch Beckmannsche Umlagerung zu vermeiden.

Es hat sich gezeigt, daß dies Aufgabe dadurch gelöst werden kann, daß man ein Acyloxisilan mit einem Ketoxim ohne Anwendung eines Säureakzeptors unter Abdestillieren der aus dem Acyloxisilan freigesetzten Carbonsäure durchführt.

Gegenstand der Erfindung ist daher ein Verfahren zur Herstellung von Oximosilanen der allgemeinen Formel (I)

$$R^1{}_aSi(O-N=CR^2R^3)_{4-a} \quad (I)$$

in der

$R^1$ einen geraden oder verzweigten Alkylrest mit 1 bis 18 Kohlenstoffatomen, einen geraden oder verzweigten Alkenylrest mit 2 bis 18 Kohlenstoffatomen, einen gegebenenfalls mit Halogen, Nitrogruppen, Aminogruppen und/oder Alkylresten mit 1 bis 4 Kohlenstoffatomen substituierten Aryl- oder Aralkylrest oder einen geraden oder verzweigten Alkoxirest mit 1 bis 8 Kohlenstoffatomen, a eine ganze Zahl von 0 bis 3, und

$R^2$ und $R^3$ unabhängig voneinander gerade oder verzweigte, gegebenenfalls mit Halogen, Nitrogruppen, Aminogruppen und/oder Alkylresten mit 1 bis 4 Kohlenstoffatomen substituierte Alkylreste mit 1 bis 18 Kohlenstoffatomen, bedeuten, durch Umsetzen eines Acyloxisilans mit einem Oxim in molarem Überschuß, dadurch gekennzeichnet, daß man ein Acyloxisilan der allgemeinen Formel (II)

$$R^1{}_aSi(OCOR^4)_{4-a} \quad (II)$$

in der $R^1$ und a die oben angegebenen Bedeutungen besitzen und $R^4$ unabhängig voneinander für gerade oder verzweigte Alkylreste mit 1 bis 18 Kohlenstoffatomen, gerade oder verzweigte Alkenylreste mit 2 bis 18 Kohlenstoffatomen oder gegebenenfalls mit Halogen, Nitrogruppen, Aminogruppen und/oder Alkylresten mit 1 bis 4 Kohlenstoffatiomen substituierte Aryl- oder Aralkylreste, steht,
mit einem Ketoxim der allgemeinen Formel (III)

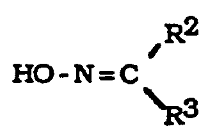

in der $R^2$ und $R^3$ die oben angegebenen Bedeutungen besitzen, ohne Anwendung eines Säureakzeptors unter Abdestillieren der aus dem Acyloxisilan der allgemeinen Formel (III) freigesetzten Carbonsäure(n) durchführt.

Bei diesem erfindungsgemäßen Verfahren kann ohne Lösungsmittel gearbeitet werden und man erhält das gewünschte Oximosilan in hoher Ausbeute und mit großer Reinheit. So läßt sich durch kontinuierliches Abdestillieren der bei der Umsetzung freigesetzten Carbonsäure die Umsetzung zu 100% bewerkstelligen. Dabei verläuft das Verfahren unter Ausschaltung der Beckmannschen Umlagerung, da bei dem erfindungsgemäßen Verfahren weder Mineralsäuren verwendet noch quaternäre Ammoniumsalze gebildet werden. Insoweit stellt die beanspruchte Verfahrensweise also eine ungefährliche und wirtschaftlich attraktive Methode dar.

Bei dem erfindungsgemäßen Verfahren verwendet man vorzugsweise Acyloxisilane der obigen allgemeinen Formel (II) in der die Gruppen $R^1$ Alkylreste mit 1 bis 8, bevorzugter mit 1 bis 4 Kohlenstoffatomen, insbesondere Methyl- oder Ethylreste, Alkenylreste mit 2 bis 8 Kohlenstoffatomen, insbesondere Vinylreste, gegebenenfalls einfach oder mehrfach mit Halogen, wie insbesondere Chlor oder Brom, Nitrogruppen, Aminogruppen und/oder Alkylresten mit 1 bis 4 Kohlenstoffatomen substituierte Phenyl- Naphthyl- oder Benzylreste und die Gruppen $R^4$ Alkylreste mit 2 bis 8, bevorzugter 2 bis 4 Kohlenstoffatomen,insbesondere Ethylreste bedeuten, während in dem Oximen der allgemeinen Formel (III) die Gruppen $R^2$ und $R^3$ vorzugsweise Wasserstoffatome oder Alkylreste mit 1 bis 8 Kohlenstoffatomen noch bevorzugter mit 1 bis 4 Kohlenstoffatomen, insbesondere Methylreste oder Ethylreste bedeuten.

Besonders bevorzugt ist es, als Acyloxisilane der allgemeinen Formel (II) Vinyl, Methyl- oder Ethyltriacetoxisilan einzusetzen, die unter Entstehung verwertbarer Beiprodukte in der Praxis anfallen. Als Oxime der allgemeinen Formel (III) verwendet man vorzugsweise Methyl-ethyl.-ketoxim oder Dimethylketoxim, die ebenfalls im Handel erhältlich sind und für die erfindungsgemäße Verfahrensweise besonders gut geeignet sind.

Bei dem erfindungsgemäßen Verfahren bewirkt man die Umsetzung vorzugsweise bei einer Temperatur im Bereich von 20 bis 60°C, bei welcher Temperatur die Umsetzung spontan bis zum chemischen Gleichgewicht abläuft. Wenn man die Umsetzung unter Abdestillieren der aus dem Acyloxisilan der allgemeinen Formel (II) freigesetzten Carbonsäure durchführt, schreitet die Umsetzung, wie bereits angesprochen wurde, bis zu 100% fort.

Mit besonderem Vorteil bewirkt man die Umsetzung und das Abdestillieren der freigesetzten Carbonsäure(n) unter vermindertem Druck. Besonders bevorzugt bewirkt man die Umsetzung bei einer Temperatur von 30 bis 120°C, evakuiert das Gefäß auf einen Druck von 0,1 bis 100 mbar und läßt die Umsetzung unter Abdestillieren eines Gemisches aus dem Oxim und der freigesetzten Säure, vorzugsweise der Essigsäure ablaufen.

Zur Förderung der Umsetzung kann man das Oxim der allgemeinen Formel (III) in einem 1- bis 4-molaren Überschuß einsetzen.

Die bei dem erfindungsgemäßen Verfahren abdestillierte Carbonsäure, die mehr oder weniger

große Anteile des als Ausgangsmaterial eingesetzten Oxims enthält, kann durch eine nachfolgende Rektifikation gereinigt werden. Die hierbei anfallende reine Carbonsäure und das nicht umgesetzte Oxim können wieder als Ausgangsmaterialien bei dem erfindungsgemäßen Verfahren eingesetzt werden.

Nach dem Abdestillieren des Essigsäure im Vakuum im Bereich von 0,1 bis 100 mbar und entsprechend einer Temperatur im Bereich von 50 bis 80°C erhält man ein Oximosilan mit einer Reinheit, die es ermöglicht, das Material für gefärbte oder transparente Silikon-Dichtstoffe zu verwenden. Es ist jedoch möglich, den verbleibenden Oximosilan-Sumpf durch eine anschließende Destillation unter vermindertem Druck zu reinigen. Man erhält ein farbloses, hochreines Oximosilan, das für alle bekannten Einsatzzwecke verwendet werden kann.

Das erfindungsgemäße Verfahren kann kontinuierlich, halbkontinuierlich oder absatzweise geführt werden. Wenngleich bei dem erfindungsgemäßen Verfahren Lösungsmittel nicht erforderlich sind, ist ihre Verwendung insbesondere als Schlepper für die bei der Reaktion gebildete Carbonsäure nicht ausgeschlossen. Bevorzugte Lösungsmittel hierfür sind chlorierte aliphatische Verbindungen, wie Perchlorethylen oder Trichlorethylen.

Das folgende Beispiel dient der weiteren Erläuterung der Erfindung.

**Beispiel**

Man wiegt 1 Mol Methyl-tris(acetoxi)-silan in einen 1-Liter-Dreihalskolben, der mit einem Rührwerk, mit einem Tropftrichter und einer Destillationsbrücke mit Vakuumverschluß ausgerüstet und vorher zur vollständigen Entfernung der Luft mit Stickstoff gespült worden ist, ein. Dann erhitzt man das feste Methyl-tris(acetoxi)-silan auf eine Temperatur von etwa 40 bis 60°C, evakuiert das Gefäß auf einen Druck von 1 mbar und läßt im Verlaufe von etwa einer Stunde 8 Mol Methyl-ethyl-ketoxim über den mit einem Vakuumausgleich ausgerüsteten Tropftrichter zufließen. Bei der Zugabe des Methyl-ethyl-ketoxims setzt unmittelbar die Destillation eines Gemisches aus Ketoxim und Essigsäure ein.

Mit Hilfe eines Gaschromatographen läßt sich die Substitution der Acetatgruppen durch Ketoximgruppen verfolgen, wobei nach Beendigung der Reaktion das überschüssige Ketoxim durch Destillation im Vakuum bei einer Temperatur von 60 bis 90°C/1 mbar entfernt wird. Man erhält bei einer praktisch quantitativen Umsetzung, bezogen auf das eingesetzte Methyl-tris(acetoxi)-silan das gewünschte Endprodukt, nämlich Methyl-tris(methyl-ethyl-ketoximo)-silan in Form einer schwach gelblich bis bräunlich gefärbten Flüssigkeit, die bei der anschließenden Destillation bei 120 bis 130°C/1 mbar in Form einer farblosen Flüssigkeit anfällt, die noch 6 bis 10% dimere oder trimäre Anteile aufweist.

**Ansprüche**

1. Verfahren zur Herstellung von Oximosilanen der allgemeinen Formel (I)

$$R^1{}_aSi(O-N=CR^2R^3)_{4-a} \quad (I)$$

in der

$R^1$ einen geraden oder verzweigten Alkylrest mit 1 bis 18 Kohlenstoffatomen, einen geraden oder verzweigten Alkenylrest mit 2 bis 18 Kohlenstoffatomen, einen gegebenenfalls mit Halogen, Nitrogruppen, Aminogruppen und/oder Alkylresten mit 1 bis 4 Kohlenstoffatomen substituierten Aryl- oder Aralkylrest oder einen geraden oder verzweigten Alkoxirest mit 1 bis 8 Kohlenstoffatomen,

a eine ganze Zahl von 0 bis 3, und

$R^2$ und $R^3$ unabhängig voneinander gerade oder verzweigte, gegebenenfalls mit Halogen, Nitrogruppen, Aminogruppen und/oder Alkylresten mit 1 bis 4 Kohlenstoffatomen substituierte Alkylreste mit 1 bis 18 Kohlenstoffatomen, bedeuten, durch Umsetzen eines Acyloxisilans mit einem Oxim in molarem Überschuß, **dadurch gekennzeichnet,** daß man ein Acyloxisilan der allgemeinen Formel (II)

$$R^1{}_aSi(OCOR^4)_{4-a} \quad (II)$$

in der $R^1$ und a die oben angegebenen Bedeutungen besitzen und $R^4$ unabhängig voneinander für gerade oder verzweigte Alkylreste mit 1 bis 18 Kohlenstoffatomen, vorzugsweise 2 bis 8 und noch bevorzugter 2 bis 4 Kohlenstoffatomen, gerade oder verzweigte Alkenylreste mit 2 bis 18 Kohlenstoffatomen oder gegebenenfalls mit Halogen, Nitrogruppen, Aminogruppen und/oder Alkylresten mit 1 bis 4 Kohlenstoffatomen substituierte Aryl- oder Aralkylreste, steht, mit einem Ketoxim der allgemeinen Formel (III)

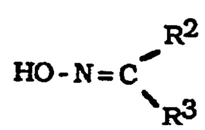

in der $R^2$ und $R^3$ die oben angegebenen Bedeutungen besitzen, ohne Anwendung eines Säureakzeptors unter Abdestillieren der aus dem Acyloxisilan der allgemeinen Formel (III) freigesetzten Carbonsäure(n) durchführt.

2. Verfahren nach Anspruch 1, **dadurch gekennzeichnet,** daß man die Umsetzung bei einer Temperatur im Bereich von 20 bis 60°C bewirkt.

3. Verfahren nach Anspruch 1, **dadurch gekennzeichnet,** daß man die Umsetzung und das Abdestillieren der freigesetzten Carbonsäuren bei einer

Temperatur im Bereich von 30 bis 120°C bei einem Druck von 0,1 bis 100 mbar durchführt.

4. Verfahren nach Anspruch 1,**dadurch gekennzeichnet**, daß man das Oxim der allgemeinen Formel (III) in einem 1 bis 4-molaren Überschuß einsetzt.

**Claims**

1. A process for the manufacture of oximosilanes of general formula (I)

$$R^1_aSi(O-N=CR^2R^3)_{4-a} \quad (I)$$

wherein $R^1$ represents a straight-chain or branched alkyl residue having 1 to 18 carbon atoms, a straight-chain or branched alkenyl residue having 2 to 18 carbon atoms, an aryl or aralkyl residue optionally substituted with halogen, nitro groups, amino groups and/or alkyl residues having 1 to 4 carbon atoms or a straight-chain or branched alkoxy residue having 1 to 8 carbon atoms, a is an integer of 0 to 3, and
$R^2$ and $R^3$ independently are straight-chain or branched alkyl residues having 1 to 18 carbon atoms optionally substituted with halogen, nitro groups, amino groups and/or alkyl residues having 1 to 4 carbon atoms, by reacting an acyloxysilane with an oxime in a molar excess, **characterized in that** an acyloxysilane of the general formula (II)

$$R^1_aSi(OCOR^4)_{4-a} \quad (II)$$

wherein $R^1$ and a are as defined above and R4 independently are straight-chain or branched alkyl residues having 1 to 18 carbon atoms, preferably 2 to 8 and more preferably 2 to 4 carbon atoms, straight-chain or branched alkenyl residues having 2 to 18 carbon atoms or aryl or aralkyl residues optionally substituted with halogen, nitro groups, amino groups and/or alkyl residues having 1 to 4 carbon atoms, is reacted with a ketoxime of the general formula (III)

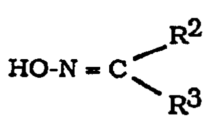

wherein $R^2$ and $R^3$ are as defined above, in the absence of an acid acceptor while distilling off the carboxylic acid(s), released from the acyloxysilane of the general formula (III).

2. The process according to claim 1, **characterized in that** the reaction is carried out at a temperature in the range of 20 to 60°C.

3. The process according to claim 1, **characterized in that** the reaction and the distilling-off of the released carboxylic acids are carried out at a temperature in the range of 30 to 120°C and a pressure of 0.1 to 100 mbar.

4. The process according to claim 1, **characterized in that** the oxime having the general formula (III) is used in an 1 to 4 molar excess.

**Revendications**

1. Procédé de préparation d'oximosilanes de formule générale (I)

$$R^1_aSi(O-N=CR^2R^3)_{4-a} \quad (I)$$

dans laquelle
$R^1$ représente un reste alkyle linéaire ou ramifié en $C_{1-18}$, un reste alcényle linéaire ou ramifié en $C_{2-18}$, un reste aryle ou aralkyle éventuellement substitué par un atome d'halogène, des groupes nitro ou amino et/ou des restes alkyle en $C_{1-4}$ ou un reste alcoxy linéaire ou ramifié en $C_{1-8}$,
a est un nombre entier valant de 0 à 3, et
$R^2$ et $R^3$, indépendamment l'un de l'autre, représentent des restes alkyle linéaires ou ramifiés en $C_{1-18}$, éventuellement substitués par un atome d'halogène, des groupes nitro ou amino et/ou des restes alkyle en $C_{1-4}$,
par réaction d'un acyloxysilane avec une oxime en excès molaire, procédé caractérisé en ce que l'on fait réagir un acyloxysilane de formule générale (II)

$$R^1_aSi(OCOR^4)_{4-a} \quad (II)$$

dans laquelle $R^1$ et a ont les significations données ci-dessus et $R^4$, indépendamment, représente des restes alkyle linéaires ou ramifiés en $C_{1-18}$, de préférence en $C_{2-8}$ et encore mieux en $C_{2-4}$, des restes alcényle linéaires ou ramifiés en $C_{2-18}$ ou des restes aryle ou aralkyle éventuellement substitués par un atome d'halogène, des groupes nitro ou amino et/ou des restes alkyle en $C_{1-4}$, avec une cétoxime de formule générale (III)

$$HO-N=C(R^2R^3) \quad (III)$$

dans laquelle $R^2$ et $R^3$ ont les significations données ci-dessus, en l'absence d'un accepteur d'acide et en séparant par distillation le (les) acide(s) carboxylique(s) formé(s) à partir de l'acyloxysilane de formule générale (III).

2. Procédé selon la revendication 1, caractérisé en ce que l'on effectue la réaction à une température de 20 à 60°C.

3. Procédé selon la revendication 1, caractérisé en ce que l'on effectue la réaction et la séparation par distillation des acides carboxyliques libérés, à une température de 30 à 120°C et sous une pression de 0,1 à 100 mbar.

4. Procédé selon la revendication 1, caractérisé

en ce que l'on met en oeuvre l'oxime de formule générale (III) en un excès de 1 à 4 moles.